# EUROPÄISCHE PATENTANMELDUNG

(11) **EP 0 987 178 A2**
(43) Veröffentlichungstag der Anmeldung: **22.03.2000**
(21) Anmeldenummer: 99112168.2
(22) Anmeldetag: 24.06.1999
(51) Int. Cl.: B64G 1/50, C09D 5/26

(54) **Element zur Steuerung der Temperatur einer Oberfläche**

(30) Priorität: 15.09.1998 DE 19842102
(71) Anmelder: DORNIER GmbH, 88039 Friedrichshafen (DE)
(72) Erfinder: Rothmund, Walter, Dr., 93142 Maxhütte-Haidhof (DE); Downar, Hartmut, Dr., 88709 Hagnau (DE); Scherber, Werner, Dr., 88697 Bermatingen (DE)

(57) **Zusammenfassung**

Die Erfindung betrifft ein Element zur Steuerung der Temperatur einer Oberfläche. Es weist folgenden Schichtaufbau auf:
- Substrat (1),
- IR-Reflektorschicht (2),
- Funktionsschicht (3), die zwischen einem IR-absorptiven Zustand und einem IR-transparenten Zustand umschaltbar ist.
Dabei besteht die Funktionsschicht (3) aus einem IR-transparenten Matrixmaterial, in das Mikropartikel (4) aus einem Material, das einen Halbleiter/Metall-Phasenübergang aufweist, eingelagert sind.

## Beschreibung

Die Erfindung betrifft ein Element zur Steuerung der Temperatur einer Oberfläche nach dem Oberbegriff des Anspruchs 1.

Derartige Elemente weisen eine variable Infrarot-Emissivität auf (Infrarot wird im folgenden mit IR abgekürzt). Bringt man sie auf die Oberfläche eines Objekts, dessen Wärmebilanz im wesentlichen durch die Abgabe von Wärmestrahlung bestimmt ist, kann die Temperatur des Objekts gesteuert werden. Ein Beispiel hierfür ist die Temperatursteuerung von Satelliten oder Raumfahrzeugen. Dabei wird die von elektronischen Komponenten erzeugte Wärme über Radiatoren, auf deren Oberfläche die Elemente aufgebracht sind, in den Raum abgestrahlt. Aus der **P 44 09 470** ist ein gattungsgemäßes Element im einzelnen beschrieben. Es umfaßt eine IR-Strahlung reflektierende Schicht sowie eine elektrochrome Funktionsschicht, die zwischen einem IR-absorptiven und einem IR-transmissiven Zustand geschaltet werden kann. Der Schaltvorgang erfolgt elektrochemisch über eine äußere Spannungsänderung.

In der **DE 23 43 016 A1** ist eine Vorrichtung zur Steuerung des Thermalhaushalts in einem umgrenzten Raum beschrieben, bei der eine der Wärmestrahlung ausgesetzte Wand mittels einer Steuerschicht abgedeckt ist, deren Reflexionsfähigkeit einstellbar ist. Die Steuerschicht besteht dabei aus einem Flüssigkristall, der durch Anlegen verschiedener elektrischer Felder in seinem Grauwert oder seiner Transparenz veränderlich ist.

In der **DD 92 593** ist eine Vorrichtung zur Temperaturregelung eines Systems beschrieben, bei dem als Regler ein Flüssigkristallfilm cholesterinischen Typs eingesetzt wird, der im Wärmekontakt mit dem zu regelnden System steht. Der Flüssigkristallfilm reflektiert oberhalb einer bestimmten Temperatur die einfallende elektromagnetische Strahlung, unterhalb dieser Temperatur ist er für elektromagnetische Strahlung durchlässig. Fällt die Temperatur des zu regelnden Systems unter die genannte Übergangstemperatur, so trifft die einfallende Strahlung auf eine Photodiode, deren Photostrom für die Heizung des zu regelnden Systems verwendet wird.

Aufgabe der Erfindung ist es, ein Element zur Steuerung der Temperatur einer Oberfläche zu schaffen, bei der die Oberflächentemperatur ohne äußere Regelung auf einen festen, vorbestimmten Wert stabilisiert werden kann.

Diese Aufgabe wird mit dem Gegenstand des Anspruch 1 gelöst. Vorteilhafte Ausführungen sind Gegenstand weiterer Ansprüche.

Erfindungsgemäß besteht die Funktionsschicht, welche auf einer IR-Reflektorschicht aufgebracht ist, aus einem Matrixmaterial, in dem Mikropartikel eingelagert sind. Die Mikropartikel bestehen aus einem Material, das einen Halbleiter/Metall-Phasenübergang aufweist.

Das Halbleiter/Metall-Phasenübergangsmaterial (im folgenden auch mit PÜM abgekürzt), wie beispielsweise VO₂, ändert seine elektrische Leitfähigkeit beim Überschreiten einer charakteristischen Übergangstemperatur T_{Üb} um bis zu 5 Größenordnungen. Für T< T_{Üb} sind diese Materialien halbleitend, also IR-transparent, während bei höheren Temperaturen metallische Leitfähigkeit eintritt, und die IR-Strahlung reflektiert wird.

Ist T< T_{Üb}, so sind die PÜM-Partikel IR-transparent und die hochreflektierende IR-Reflektorschicht sorgt für geringe Wärmeabstrahlung. Für T< T_{Üb} werden die PÜM-Partikel metallisch und es tritt innerhalb der Funktionsschicht hohe IR-Absorption auf, sofern die Partikelgröße unterhalb der Wellenlänge des thermischen Infrarotlichtes ist. Besonders geeignet sind hierbei Partikelgrößen kleiner als 5 µm.

Bei Temperaturen T< T_{Üb} weist die Oberfläche somit eine geringe Infrarot-Emissivität auf (Wärme wird zurückgehalten), während bei Überschreiten der Phasenübergangstemperatur T_{Üb} die Oberfläche hochemittierend wird (Wärme wird abgestrahlt). Auf diese Weise stabilisiert sich die Temperatur der Oberfläche ohne äußere Regelung auf die Temperatur des Phasenüberganges.

Die Materialien für die Mikropartikel können zum Beispiel so ausgewählt werden, daß deren Übergangstemperatur gerade der zulässigen Betriebstemperatur eines Radiators an einem Raumfahrzeug entspricht.

Die Anwendung der Erfindung erstreckt sich von der Thermalsteuerung von Raumfahrzeugen oder Satelliten über Elemente zur Erzeugung von Infrarotsignaturen für die unsichtbare und vorübergehende Identifikation von Gegenständen bis hin zu Elementen zur Steuerung von thermischen Strahlungsflüssen allgemein.

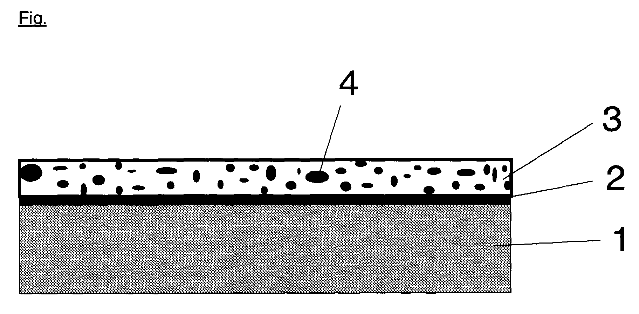

Ein Ausführungsbeispiel des erfindungsgemäßen Elements ist in der einzigen Fig. dargestellt. Das dargestellte Schichtsystem ist wie folgt aufgebaut: Auf einem Substrat 1, daß auf einer hier nicht dargestellten Oberfläche aufgebracht ist, z.B. dem Strahlungsradiator eines Satelliten, ist eine metallische IR-Reflektorschicht 2 aufgebracht. Auf diesem IR-Reflektor befindet sich die Funktionsschicht 3 aus einer IR-transparenten Matrix, in die Mikropartikel 4 eines PÜM eingelagert sind. Deren Größe ist kleiner als die Wellenlänge der betrachteten Wärmestrahlung, insbesondere kleiner 5 µm. Die Schichtdicke der Funktionsschicht 3 sollte bevorzugt in der Größenordnung der Wellenlänge des betrachteten Infrarotlichts, insbesondere im Bereich von 10 - 100 µm liegen.
Ist nun die Temperatur kleiner als die Übergangstemperatur T_{Üb} der Mikropartikel, so sind sowohl die Matrix als auch die Mikropartikel 4 IR-transparent. Im Idealfall gleicher Brechungsindizes wirkt die Kombination aus Matrix mit eingelagerten Mikropartikeln 4 wie eine homogene IR-transparente Schicht, d. h. die Emissivität der Anordnung ist gegeben durch den IR-Reflektor 2 und liegt nahe 0.
Für T>T_{Üb} werden die Partikel 4 metallisch. Die Kombination aus IR-transparenter Matrix mit darin eingelagerten Mikropartikeln 4 wird dadurch, je nach Volumenkonzentration der Partikel 4, mehr oder weniger absorptiv und die Emissivität der Anordnung steigt an.

Somit kann die Temperatur selbstregelnd auf die Temperatur T_{Üb} des Phasenübergangs stabilisiert werden. Dieser Vorgang ist vollständig reversibel und unterliegt keinerlei Degradation durch Zyklisierung.

Das Matrixmaterial der Funktionsschicht 3 kann z.B. ein Polymer wie Polyethylen, Polyimid oder ein Halbleiter wie Si, Ge sein.

Die in der Funktionsschicht 3 eingelagerten Mikropartikel können z.B. aus VO₂ oder NiS bestehen. In einer weiteren Ausführungen können diese Verbindungen auch mit Fremdatomen wie z. B. W, Mo, Ta, Nb, usw. dotiert sein.

Als Material für das Substrat kann z.B poliertes Silizium, Glas, Germanium o.ä. verwendet werden.

Die IR-Reflektorschicht besteht zum Beispiel aus Silber, Aluminium, Gold, Platin oder einem anderen Metall.

## Patentansprüche

1. Element zur Steuerung der Temperatur einer Oberfläche, mit folgendem Schichtaufbau:
- Substrat (1),
- IR-Reflektorschicht (2),
- Funktionsschicht (3), die zwischen einem IR-absorptiven Zustand und einem IR-transparenten Zustand umschaltbar ist,
dadurch gekennzeichnet, daß die Funktionsschicht (3) aus einem IR-transparenten Matrixmaterial besteht, in das Mikropartikel (4) aus einem Material, das einen Halbleiter/Metall-Phasenübergang aufweist, eingelagert sind.

2. Element nach Anspruch 1 dadurch gekennzeichnet, daß das Substrat (1) aus poliertem Silizium, Glas oder Germanium besteht.

3. Element nach Anspruch 1 oder 2, dadurch gekennzeichnet, daß die IR-Reflektorschicht (2) aus Silber, Aluminium, Gold, Platin, oder einem anderen Metall besteht.

4. Element nach einem der vorangehenden Ansprüche, dadurch gekennzeichnet, daß das Matrixmaterial der Funktionsschicht (3) ein Polymer wie Polyethylen, Polyimid oder ein Halbleiter wie Si, Ge ist.

5. Element nach einem der vorangehenden Ansprüche, dadurch gekennzeichnet, daß die in der Funktionsschicht (3) eingelagerten Mikropartikel (4) aus VO₂ oder NiS oder mit Fremdatomen wie z. B. W, Mo, Ta, Nb dotiertem VO₂ oder NiS bestehen.

6. Element nach einem der vorangehenden Ansprüche, dadurch gekennzeichnet, daß die Brechungsindizes von Matrixmaterial und Mikropartikel (4) im wesentlichen identisch sind.

7. Element nach einem der vorangegangenen Ansprüche, dadurch gekennzeichnet, daß die Dicke der Funktionsschicht (3) zwischen 10 und 100 µm liegt.

8. Element nach einem der vorangegangenen Ansprüche, dadurch gekennzeichnet, daß die in der Funktionsschicht (3) eingelagerten Mikropartikel (4) kleiner als 5 µm sind.

9. Verfahren zur Stabilisierung der Betriebstemperatur einer Oberfläche auf einen vorbestimmten Wert durch selbstregulierende Abgabe von Wärmestrahlung, indem auf die Oberfläche ein Element nach einem der vorangehenden Ansprüche aufgebracht wird, wobei der vorbestimmte Temperaturwert gleich der Übergangstemperatur des Halbleiter/Metall-Phasenübergang der Mikropartikel (4) ist.
